**Europäisches Patentamt**

**European Patent Office**

**Office européen des brevets**

(11) Publication number: **0 210 213**
**B1**

(12) **EUROPEAN PATENT SPECIFICATION**

(45) Date of publication of patent specification: **04.07.90**

(21) Application number: **86900803.7**

(22) Date of filing: **17.01.86**

(86) International application number:
**PCT/GB86/00034**

(87) International publication number:
**WO 86/04476 31.07.86 Gazette 86/17**

(51) Int. Cl.⁵: **H 04 Q 7/02, H 04 L 12/26,
G 08 B 3/10**

(54) **RADIO PAGER WITH ERROR DETECTION.**

(30) Priority: **18.01.85 GB 8501276**

(43) Date of publication of application:
**04.02.87 Bulletin 87/06**

(45) Publication of the grant of the patent:
**04.07.90 Bulletin 90/27**

(84) Designated Contracting States:
**AT BE CH DE FR GB IT LI LU NL SE**

(56) References cited:
**EP-A-0 005 317
EP-A-0 117 595
GB-A-2 101 779
GB-A-2 118 337**

(73) Proprietor: **Multitone Electronics PLC
12 Underwood Street
London N1 7JT (GB)**

(72) Inventor: **LAX, Alexander, Peter
26 Bereweeke Way Winchester
Hampshire (GB)**
Inventor: **SPIERS, John
37 Russell Road
Moor Park Hertfordshire (GB)**

(74) Representative: **Pilch, Adam John Michael et al
c/o D. Young & Co. 10 Staple Inn
London WC1V 7RD (GB)**

Courier Press, Leamington Spa, England.

## Description

This invention relates to a radio pager, and more particularly to a radio pager having the capability of detecting errors in its received messages.

A number of radio paging systems include some error detecting feature whereby small errors arising from such causes as weak transmissions or interference can be either corrected or at least detected as errors. For example, in the format devised by the British Post Office Code Standardization Advisory Group (POCSAG) and adopted by CCIR as Radiopaging Code No. 1, a series of address signals follows a preamble signal, with regular synchronisation signals being interspersed. An address signal for a particular pager or group of pagers may then be followed by a message signal which can be displayed by the pager. Fuller details are given in "A Standard Code for Radiopaging—a Report of the Studies of the British Post Office Code Standardisation Advisory Group (POCSAG)" published in 1978 by British Telecom (then part of the British Post Office). In Appendix 1 (page 11) of this publication, details are given of codeword generation which is of the form 31, 21 BCH+Parity. It is common for pagers to be able to identify and correct a single bit error on the basis of the check bit information. However, correction of further bits can only be done with a decreasing probability that the process has been successful, although it is often possible to predict that an error is present.

In so-called wide area paging systems, it is known for a number of transmitters to transmit the same message sequentially, so as to increase the probability of the correct message being received. If the pager is situated in an overlap zone, the same meassage may be received (for example) three times but, each of the three transmissions may be subject to some degradation, since such an overlap zone may be on the fringes of transmission range.

Pagers capable of storing more than one message tend to fill up with such repeat messages, unless some message comparison process is provided as, for example, described in UK Patent Application Serial No. GB—A—2 101 779. Even then, the comparison will only successfully reject further messages if no errors are present, otherwise the messages will not be found to be identical. The effect of this is that a user will read two near-identical messages and may have no indication (for example, in the case of telephone numbers) which is correct. Furthermore, particularly in a fringe overlap zone, it is possible that none of the messages is correct, although statistically it will be unlikely that errors will have been introduced at the same positions within each message.

In European Patent Application Serial No. EP—A—0 203 139 (PCT WO 86/03317) which was published after the priority and filing dates of the present application which does not designate Austria, Belgium or Luxembourg, there is described a message transmitting/receiving method for radio pagers in which an identity code is included in the transmission to identify a particular message. The identity code of an incoming message is compared with the identity codes of stored messages. If errors have been identified in a stored message with the same identity code, a final corrected version of the message is constructed from parts of the stored and currently-received messages which have been identified as error-free. The identity code follows an address code (which identifies a specific receiver or group of receivers) and thus specific provision needs to be made in all receivers to allow for reception of this code; it is not possible for the resulting transmission format to be compatible with existing receivers.

According to the present invention there is provided a radio pager for receiving a transmission that comprises a plurality of slective address signals and a plurality of respective message signals, the radio pager comprising:

address detection means operative to detect a predetermined said address signal;

a memory operative to store at least one message signal associated with a respective detected predetermined address signal; and

comparing means for comparing data stored in the memory with currently-received data;

characterised in that, for receiving a transmission comprising said selective address signals, a plurality of respective message signals including error checking information capable of providing an indication of the position of errors within the message signals, and label signals each providing an indication of a message code associated with the respective message signal;

the memory is operative to store the label signal as well as the respective message signal;

the comparing means is operative to compare the or each label signal stored in the memory with the currently-received label signal and to provide an indication when the message codes of the compared label signals are the same; and

error correcting means is provided responsive to an indication from the comparing means that the compared message codes are the same to provide a corrected message signal derived from the stored and currently-received message signals having the same message codes, by using parts of each of the message signals for which the error checking information indicates that there is no error.

According to the present invention there is also provided a radio pager for receiving a transmission that comprises a plurality of selective address signals and a plurality of respective message signals, the radio pager comprising:

address detection means operative to detect a predetermined said address signal;

a memory for storing at least one message signal associated with a respective detected predetermined address signal; and

comparing means for comparing data stored in the memory with currently-received data;

characterised in that, for receiving a transmission comprising said selective address signals, a plurality of respective message signals, and label signals each providing an indication of a message code associated with the respective message signal:

the comparing means is operative to compare the or each label signal stored in the memory with the currently-received label signal and to provide an indication when the message codes of the compared label signals are the same, the memory being operative to store the message signals only if the comparing means does not indicate that the message codes of the compared label signals are the same.

In respect of Switzerland, Germany, France, the United Kingdom, Italy, Netherlands and Sweden, according to the present invention the transmissions to be received include the label signal, the address signal and the message signal in that order, the address detection means being operative to enable further processing of the label and message signals when the predetermined address signal is detected.

It will therefore be apparent that, according to the first aspect of the invention, the error correcting means is capable of deriving the corrected message signal by judicious combination of parts of message signals identified by their labels as being the same, the error checking part of each message signal indicating where in the signal errors are present, so that those errors are not included in the composite corrected signal.

In certain formats, such as the POCSAG format, each message signal comprises a number of message codewords, each having its own error correction capability. This capability can be utilised (as previously described) to provide a degree of error correction, but if insufficient, the error correcting means embodying the present invention will provide a further correction mechanism.

It is necessary for the transmitting system to assign a message code, which can be a simple message number, to each message when it is received from a caller so that when the message is transmitted at different times by different transmitters, the same message number will be transmitted each time, and this will provide a positive result in the comparison process. In certain systems, this message label could be related to a global variable such as time of day.

The label can conveniently be provided as a "header" portion to the message signal, which allows easy processing since the label comparison can be performed as soon as the address signal has been identified as relating to the particular pager. Alternatively, the label may instead be included at some other location within the received signal, for example it may be interleaved with the message signal or even the address signal. However, the presently-preferred arrangement is for the label to be transmitted as a codeword before the address codeword.

Where a multiple message storage capability is provided, the comparison step ensures that only messages having different message numbers are stored each time, whereas if the message numbers are the same, the error correcting means will check for message integrity and, if necessary, derive an improved or corrected message and then store that improved or corrected version. Thus the performance of the pager is considerably enhanced.

The invention will now be further described, by way of illustrative and non-limiting example, with reference to the accompanying drawings, in which:

Figure 1 shows a schematic block diagram of one radio pager arrangement having a multiple message storage capability; and

Figure 2 shows a schematic block diagram of a second arrangement.

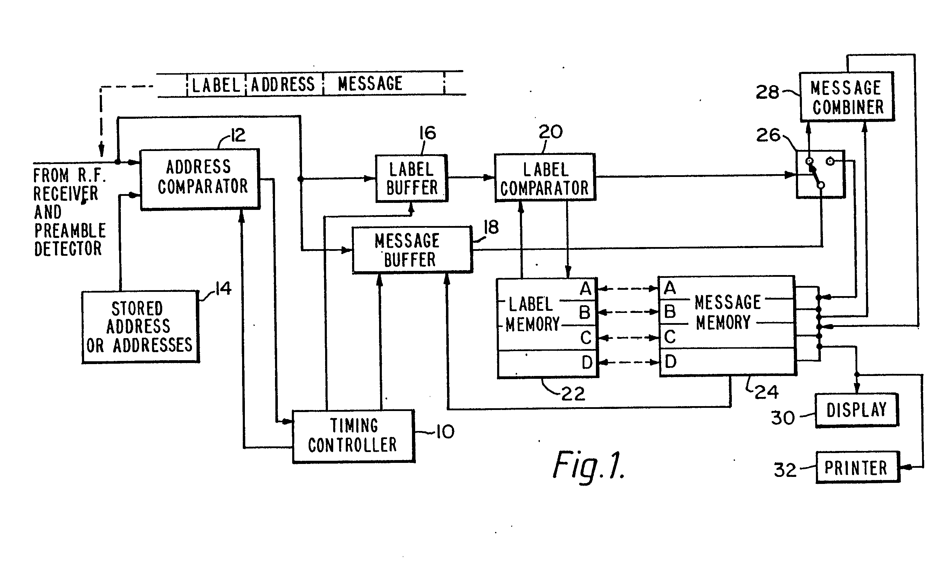

Referring to Figure 1, a radio pager includes an address comparator 12 receiving a signal from an RF receiver and preamble detector section (not shown) of the pager. In some formats including the POCSAG formant, synchronisation signals are provided at regular intervals, and the circuit should be capable of detecting these signals so as to attain synchronisation with the received signal. The circuit will be described with reference to an adaptation of the aforementioned POCSAG signal format, but any other format having an error detecting facility and some form of address code discriminating ability, could be adapted instead. In the case of the U.K. POCSAG format, the label signal needs to be included somewhere in the code, and a convenient position is as a "header" portion to the address and message signals, in other words, it is transmitted just before the address signal and the message signal, as shown in Figure 1.

Accordingly, the label signal is the first to be received and this signal is fed from the RF receiver section to a label buffer 16 for temporary storage. The next signal in the transmission is the address code. The address comparator 12 compares the received address code from the RF receiver section with its own stored address or addresses 14 under the control of a timing controller 10 which ensures that all operations are correctly synchronised. When the comparison made by the address comparator 12 is positive, the timing controller 10 receives an enabling signal as a result of which the timing controller allows the message signal (which follows the address) to be stored in a message buffer store 18. Conventional error detection and/or error correction techniques are used at this stage so that uncorrectable message errors can be determined. Typically, if one or more uncorrectable errors have been detected, error data will be added to the message data in the message buffer store 18, the error data indicating where uncorrectable errors are present in the message signal.

If the comparison made by the address comparator 12 indicates that the message is not intended for the particular receiver, the next label signal is admitted to the label buffer store 16 to replace the previous stored label signal. Also the message signal is not accepted into the message buffer store 18.

A label comparator 20 compares the label signal in the label buffer store 16 with previously received and stored label signals in a label memory 22 having sufficient capacity for a particular number of label signals to be stored (four as shown, at locations A—D). Asociated with the label memory 22 is a message memory 24 having the capacity for an equivalent number of message signals to be stored.

If the label comparison shows that the message associated with the particular label signal has not yet been received and stored, the label and message signals are respectively loaded into suitable locations in the label and message memories 22, 24. If however, the comparison shows that the message has already been received, a switching means 26 causes the message signal to be fed to a message combiner 28 instead. Also, the equivalent stored message signal is read out of the appropriate location, say C, of the message memory 24, again to the message combiner 28. The message combiner 28 analyses the two message signals and, if differences are present, and the check bit information in the code is sufficient to indicate the position of the or each erroneous codeword, a process of judicious combination of parts of each message signal can provide a corrected composite message signal. This signal can then be loaded back into the same location in the message memory 24. The contents of the message memory 24 can be displayed on a display 30, or sent to a printer 32 or to another output device (not shown).

Although it was previously stated that such operation is particularly advantageous in overlapping zones of a wide area paging system, where the repeat messages come from different transmitters, it will be seen that the system is equally applicable to a situation where messages are repeatedly transmitted from a single transmitter. Operation will be identical and equally effective, as long as the same message number is assigned in the label signal of each transmission, so that the message correction can be effected.

A significant advantage of the described system is that, although an amount of correction capability is already inherent in certain codes, such as the POCSAG format, even if repeat messages are received, it is not possible to ascertain whether uncorrectable messages are the same or not. The present system provides this capability. It is statistically unlikely that the same portions of repeat messages will be degraded, since such degradation in transmission is a random process.

In the POCSAG format or similar formats, to allow effective error correction of the above type, the system must be able to determine whether or not the incoming message data is a repeat of a previously received message, and this information is provided by message numbering in the label signal. In addition, it must be able to determine the total message length, so that interference cannot cause premature termination of the decoding process. This information may be part of the transmitted label or may be programmed into the decoder where fixed length messages only are involved. In the 31, 21 BCH+parity code (which forms the basis of the POCSAG code), the information for both of the above requirements may be transmitted in a single code word. In any given system where surplus capacity exists in this codeword, fixed data patterns should be transmitted in order to reduce the probability of errors. Equally if the address codeword capacity is not fully utilised, then the information regarding message length and repetition could be included here as the label signal. The label signal will not generally be displayed by the paging receiver. The transmission system will generate the labels. If the receiver decoder determines from the labels that the same message has been received more than once, then it will construct the best common message as described above. This technique also overcomes the problem of wasteful data storage in the receiver due to reception of the same message emanating from multiple transmitters operating sequentially when the receiver is in an overlap zone.

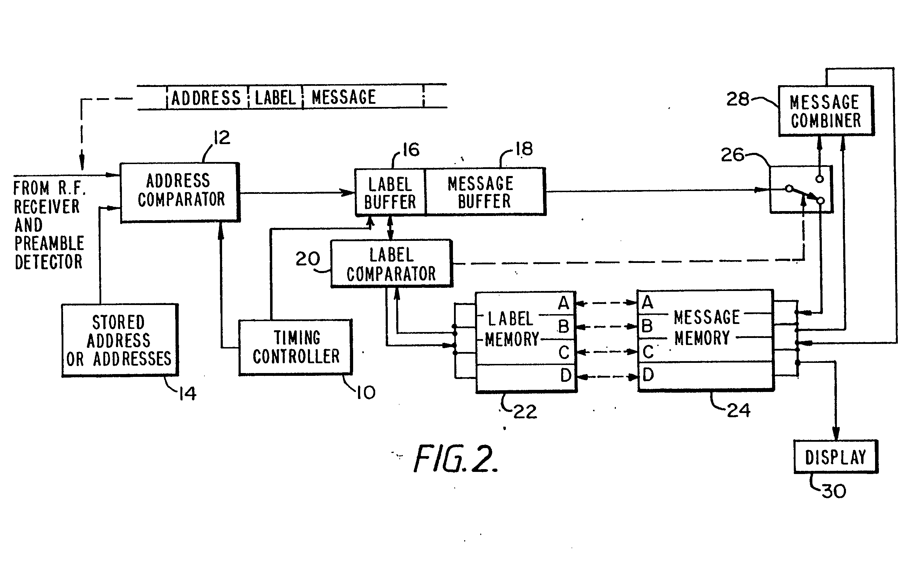

The preferred signal format of "label", "address" and "message" has the advantage that in existing formats, such as POCSAG, it is possible to have compatible transmissions to receivers whether provided with the label detection facility or not. No change to the basic format is necessary. A receiver not having the label detection facility will simply ignore any transmitted label code and check the address code to see whether the receiver's address is present or not, in conventional manner. Where such compatibility is not required, a simpler receiver can be provided, for example as shown in Figure 2.

The receiver of Figure 2 is capable of receiving a signal format of the type "address", "label" and "message". The circuit is simpler since label and message storage need not take place unless the address comparison is positive. Similar reference numerals designate similar parts and the basic operation of the circuit is similar to that of Figure 1, once a positive address comparison has been made and accordingly label and message data have been read into the respective buffers 16, 18.

In both Figure 1 and Figure 2 embodiments (as well as any others), the label signal may additionally offer a means of system control of the receiver, for example, transmitting a certain label signal may switch particular receiver facilities on or off. The following features may, for example, be included.

1. Switching the pager into and out of different operational modes. These modes could, for example, be different battery economy cycles or data rates.

2. Adding or removing the ability of the receiver to respond to certain predetermined addresses.

3. Enabling an address of the receiver to be programmed via the radio link. In this case the new address would be part of the received message data.

4. The label may also be used for updating a particular message previously transmitted.

In addition, the label may include check bits calculated from the total message so that the probability of an incorrect decoding of the message is further reduced.

## Claims for the Contracting States: CH, DE, FR, GB, IT, NL, SE

1. A radio pager for receiving a transmission that comprises a plurality of selective address signals and a plurality of respective message signals, the radio pager comprising:

address detection means (12, 14) operative to detect a predetermined said address signal;

a memory (24) operative to store at least one message signal associated with a respective detected predetermined address signal; and

comparing means (20) for comparing data stored in the memory with currently-received data;

characterised in that, for receiving a transmission comprising said selective address signals, a plurality of respective message signals including error checking information capable of providing an indication of the position of errors within the message signals, and label signals each providing an indication of a message code associated with the respective message signal:

the memory (22, 24) is operative to store the label signal as well as the respective message signal;

the comparing means (20) is operative to compare the or each label signal stored in the memory (22, 24) with the currently-received label signal and to provide an indication when the message codes of the compared label signals are the same; and

error correcting means (26, 28) is provided responsive to an indication from the comparing means (20) that the compared message codes are the same to provide a corrected message signal derived from the stored and currently-received message signals having the same message codes, by using parts of each of the message signals for which the error checking information indicates that there is no error;

wherein the transmissions to be received include the label signal, the address signal and the message signal in that order, the address detection means (12, 14) being operative to enable further processing of the label and message signals when the predetermined address signal is detected.

2. A radio pager for receiving a transmission that comprises a plurality of selective address signals and a plurality of respective message signals, the radio pager comprising:

address detection means (12, 14) operative to detect a predetermined said address signal;

a memory (24) for storing at least one message signal associated with a respective detected predetermined address signal; and

comparing means (20) for comparing data stored in the memory with currently-received data;

characterised in that, for receiving a transmission comprising said selective address signals, a plurality of respective message signals, and label signals each providing an indication of a message code associated with the respective message signal:

the comparing means (20) is operative to compare the or each label signal stored in the memory (22, 24) with the currently-received label signal and to provide an indication when the message codes of the compared label signals are the same, the memory (22, 24) being operative to store the message signal only if the comparing means (20) does not indicate that the message codes of the compared label signals are the same;

wherein the transmissions to be received include the label signal, the address signal and the message signal in that order, the address detection means (12, 14) being operative to enable further processing of the label and message signals when the predetermined address signal is detected.

3. A radio pager according to Claim 1 or Claim 2, wherein buffer stores (16, 18) are provided for temporarily storing the currently-received message and label signals.

4. A radio pager according to Claim 3, wherein the currently-received label signal is sent to the comparing means (20) upon detection by the address detection means (12, 14) of the predetermined address signal, the message and label signals stored in the buffer stores (16, 18) being updated upon receipt of new message and label signals.

5. A radio pager according to any one of the preceding claims, wherein the label signal is arranged to provide a control function in addition to the error correcting or message storing functions.

## Claims for the Contracting States: AT, BE, LU

1. A radio pager for receiving a transmission that comprises a plurality of selective address signals and a plurality of respective message signals, the radio pager comprising:

address detection means (12, 14) operative to detect a predetermined said address signal;

a memory (24) operative to store at least one message signal associated with a respective detected predetermined address signal; and

comparing means (20) for comparing data stored in the memory with currently-received data;

characterised in that, for receiving a transmission comprising said selective address signals, a plurality of respective message signals including error checking information capable of providing an indication of the position of errors within the message signals, and label signals each providing an indication of a message code associated with the respective message signal:

the memory (22, 24) is operative to store the label signal as well as the respective message signal;

the comparing means (20) is operative to compare the or each label signal stored in the memory (22, 24) with the curently-received label signal and to provide an indication when the message codes of the compared label signals are the same; and

error correcting means (26, 28) is provided responsive to an indication from the comparing means (20) that the compared message codes are the same to provide a corrected message signal derived from the stored and currently-received message signals having the same message codes, by using parts of each of the message signals for which the error checking information indicates that thère is no error.

2. A radio pager for receiving a transmission that comprises a plurality of selective address signals and a plurality of respective message signals, the radio pager comprising:

address detection means (12, 14) operative to detect a predetermined said address signal;

a memory (24) for storing at least one message signal associated with a respective detected predetermined address signal; and

comparing means (20) for comparing data stored in the memory with currently-received data;

characterised in that, for receiving a transmission comprising said selective address signals, a plurality of respective message signals, and label signals each providing an indication of a message code associated with the respective message signal:

the comparing means (20) is operative to compare the or each label signal stored in the memory (22, 24) with the currently-received label signal and to provide an indication when the message codes of the compared label signals are the same, the memory (22, 24) being operative to store the message signal only if the comparing means (20) does not indicate that the message codes of the compared label signals are the same.

3. A radio pager according to Claim 1 or Claim 2, wherein buffer stores (16, 18) are provided for temporarily storing the currently-received message and label signals.

4. A radio pager according to Claim 1 or Claim 2, wherein the transmissions to be received include the label signal, the address signal and the message signal in that order, the address detection means (12, 14) being operative to enable further processing of the label and message signals when the predetermined address signal is detected.

5. A radio pager according to Claim 4, wherein buffer stores (16, 18) are provided for temporarily storing the currently-received message and label signals, the label signal being sent to the comparing meas (20) upon detection by the address detection means (12, 14) of the predetermined address signal, the message and label signals stored in the buffer stores (16, 18) being updated upon receipt of new message and label signals.

6. A radio pager according to any one of the preceding claims, wherein the label signal is arranged to provide a control function in addition to the error correcting or message storing functions.

**Patentansprüche für die Vertragsstaaten: CH, DE, FR, GB, IT, NL, SE**

1. Radiorufanlage für den Empfang einer Sendung, welche eine Mehrzahl von wählbaren Adreßsignalen und eine Mehrzahl von entsprechenden Nachrichtensignalen aufweist, mit:

einer Adressenerfassungseinrichtung (12, 14), welche se betreibbar ist, daß sie ein vorbestimmtes Adressensignal erfaßt;

einem Speicher (24), welcher so betreibbar ist, daß er zumindest ein Nachrichtensignal abspeichert, das mit einem entsprechenden erfaßten vorbestimmten Adressensignal verknüpft ist; und

einer Vergleichseinrichtung (20) zum Vergleich von Daten, welche in dem Speicher gespeichert sind, mit gerade empfangenen Daten;

dadurch gekennzeichnet, daß für den Empfang einer Sendung, welche die wählbaren Adressensignale und eine Mehrzahl der jeweiligen Nachrichtensignale aufweist, einschließlich einer Fehlerüberprüfungsinformation, die in der Lage ist, eine Anzeige der Fehlerposition innerhalb der Nachrichtensignale bereitzustellen, sowie Kennsignale aufweist, die jeweils eine Anzeige für einen Nachrichtencode bereitstellen, welcher mit dem entsprechenden Nachrichtensignal verknüpft ist:

der Speicher (22, 24) so betriebbar ist, daß er das Kennsignal ebenso wie das entsprechende Nachrichtensignal speichert;

die Vergleichseinrichtung (20) so betreibbar ist, daß sie das bzw. jedes Kennsignal, welches in dem Speicher (22, 24) gespeichert ist, mit dem gerade empfangenen Kennsignal vergleicht und eine Anzeige bereitstellt, wenn die Nachrichtencodes der verglichenen Kennsignale die gleichen sind; und

daß eine Fehlerkorrektureinrichtung (26, 28) vorgesehen ist, welche auf eine Anzeige der Vergleichseinrichtung (20), daß die verglichenen Nachrichtencodes gleich sind, anspricht, um ein korrigiertes Nachrichtensignal bereitzustellen, welches aus dem gespeicherten und dem gerade empfangenen Nachrichtensignal, welche die gleichen Nachrichtencodes haben, abgeleitet wird, indem Teile jedes Nachrichtensignals verwendet werden, für welche die Fehlerprüfininformation anzeigt, daß sie keinen Fehler aufweisen;

wobei die Sedungen, die empfangen werden sollen, das Kennsignal, das Adressensignal und das Nachrichtensignal in dieser Reihenfolge enthalten und die Adressenerfassungseinrichtung (12, 14) so betreibbar ist, daß sie die weitere Verarbeitung der Kenn- und der Nachrichtensignale erlauben, wenn das vorher festgelegte Adressensignal erfaßt wird.

2. Radiorufanlage für den Empfang einer Sendung, welche eine Mehrzahl von wählbaren Adressensignalen sowie eine Mehrzahl von entsprechenden Nachrichtensignalen aufweist, mit

einer Adressenerfassungseinrichtung (12, 14), welche so betreibbar ist, daß sie ein zuvor festgelegtes Adressensignal erfaßt;

einem Speicher (24) zum Speichern zumindest eines Nachrichtensignales, welches mit einem entsprechenden, erfaßten vorbestimmten Adressensignal verknüpft ist; und

einer Vergleichseinrichtung (20) für den Vergleich von Daten, welche in dem Speicher gespeichert sind, mit gerade empfangenen Daten;

dadurch gekennzeichnet, daß für den Empfang einer Sendung, welche die wählbaren Adressensignale, eine Mehrzahl von entsprechenden Nachrichtensignalen und Kennsignale aufweist, die jeweils die Anzeige eines Nachrichtencodes bereitstellen, welcher mit dem entsprechenden Nachrichtensignal verknüpft ist:

die Vergleichseinrichtung (20) so betreibbar ist, daß sie das oder jedes Kennsignal, welches in dem Speicher (22, 24) gespeichert ist, mit dem gerade empfangenen Kennsignal vergleicht und daß sie eine Anzeige vorsieht, wenn die Nachrichtencodes der vergleichtenen Kennsignale die gleichen sind, wobei der Speicher (22, 24) so betreibbar ist, daß er die Nachrichtensignale nur dann speichert, wenn die Vergleichseinrichtung (20) nicht anzeigt, daß die Nachrichtencodes der verglichenen Kennsignale die gleichen sind;

wobei die Sendungen, die empfangen werden sollen, das Kennsignal, das Adressensignal und das Nachrichtensignal in dieser Reihenfolge enthalten und die Adressenerfassungseinrichtung (12, 14) so betreibbar ist, daß sie ein weiters Verarbeiten der Kenn- und Nachrichtensignale ermöglicht, wenn das zuvor festgelegte Adressensignal erfaßt wird.

3. Radiorufanlage nach Anspruch 1 oder 2, wobei Pufferspeicher (16, 18) für ein zweitweises Speichern der gerade empfangenen Nachrichten- und Kennsignale vorgesehen sind.

4. Radiorufanlage nach Anspruch 3, wobei das gerade empfangene Kennsignal nach Erfassung durch die Adressenerfassungseinrichtung (12, 14) für das zunächst festgelegte Adressensignal zu einer Vergleicheinrichtung (20) geschickt werden, wobei die Nachrichten- und Kennsignale, welche in den Pufferspeichern (16, 18) abgespeichert sind, aufgrund des Empfanges der neuen Nachrichten- und Kennsignale aufgearbeitet bzw. auf den neuesten Stand gebracht werden.

5. Radiorufanlage nach einem der vorstehenden Ansprüche, wobei das Kennsignal so angeordnet ist, daß es eine Kontrollfunktion zusätzlich zu den Fehlerkorrekturen oder den Nachrichtenspeicherfunktionen bereitstellt.

**Patentansprüche für die Vertragsstaaten: AT, BE, LU**

1. Radiorufanlage für den Empfang einer Sendung, welche eine Mehrzahl von wählbaren Adreßsignalen und eine Mehrzahl von entsprechenden Nachrichtensignalen aufweist, mit:

einer Adressenerfassungseinrichtung (12, 14), welche so betreibbar ist, daß sie ein vorbestimmtes Adressensignal erfaßt;

einem Speicher (24), welcher so betreibbar ist, daß er zumindest ein Nachrichtensignal abspeichert, daß mit einem entsprechenden erfaßten vorbestimmten Adressensignal verknüpft ist; und

einer Vergleichseinrichtung (20) zum Vegleich von Daten, welche in dem Speicher gespeichert sind, mit gerade empfangenen Daten;

dadurch gekennzeichnet, daß für den Empfang einer Sendung, welche die wählbaren Adressensignale und eine Mehrzahl der jeweiligen Nachrichtensignale, einschließlich einer Fehlerüberprüfungsinformation, die in der Lage ist, eine Anzeige der Fehlerposition innerhalb der Nachrichtensignale bereitzustellen, sowie Kennsignale aufweist, die jeweils eine Anzeige für einen Nachrichtencode bereitstellen, welcher mit dem entsprechenden Nachrichtensignal verknüpft ist:

der Speicher (22, 24) so betreibbar ist, daß er das Kennsignal ebenso wie das entsprechende Nachrichtensignal speichert;

die Vergleichseinrichtung (20) so betreibbar ist, daß sie das bzw. jedes Kennsignal, welches in dem Speicher (22, 24) gespeichert ist, mit dem gerade empfangenen Kennsignal vergleicht und eine Anzeige bereitstellt, wenn die Nachrichtencodes der verglichenen Kennsignale der gleichen sind; und

daß eine Fehlerkorrektureinrichtung (26, 28) vorgesehen ist, welche auf eine Anzeige der Vergleichseinrichtung (20), daß die verglichenen Nachrichtencodes gleich sind, anspricht, um ein korrigiertes Nachrichtensignal bereitzustellen, welches aus dem gespeicherten und dem gerade empfangenen Nachrichtensignal, welche die gleichen Nachrichtencodes haben, abgeleitet wird, indem Teile jedes Nachrichtensignals verwendet werden, für welche die Fehlerprüfinformation anzeigt, daß sie keinen Fehler aufweisen.

2. Radiorufanlage für den Empfange einer Sendung, welche eine Mehrzahl von wählbaren Adressensignalen sowie eine Mehrzahl von entsprechenden Nachrichtensignalen aufweist, mit

einer Adressenerfassungseinrichtung (12, 14), welche so betreibbar ist, daß sie ein zuvor festgelegtes Adressensignal erfaßt;

einem Speicher (24) zum Speichern zumindest eines Nachrichtensignales, welches mit einem entsprechenden, erfaßten vorbestimmten Adressensignal verknüpft ist; und

einer Vergleichseinrichtung (20) für den Vergleich von Daten, welche in dem Speicher gespeichert sind, mit gerade empfangenen Daten;

dadurch gekennzeichnet, daß, für den Empfang einer Sendung, welche die wählbaren Adressensignale, eine Mehrzahl von entsprechenden Nachrichtensignalen und Kennsignale aufweist, die jeweils die Anzeige eines Nachrichtencodes bereitstellen, welcher mit dem entsprechenden Nachrichtensignal verknüpft ist:

die Vergleichseinrichtung (20) so betreibbar ist, daß sie das oder jedes Kennsignal, welches in dem Speicher (22, 24) gespeichert ist, mit dem gerade empfangenen Kennsignal vergleicht und daß sie eine Anzeige vorsieht, wenn die Nachrichtencodes der verglichenen Kennsignale, die gleichen sind, wobei der Speicher (22, 24) so betreibbar ist, daß er die Nachrichtensignale nur dann speichert, wenn die Vergleichseinrichtung (20) nicht anzeigt, daß die Nachrichtencodes der verglichenen Kennsignale die gleichen sind.

3. Radiorufanlage nach Anspruch 1 oder 2, wobei Pufferspeicher (16, 18) für ein zweitweises Speichern der gerade empfangenen Nachrichten- und Kennsignale vorgesehen sind.

4. Radiorufanlage nach Anspruch 1 oder 2, wobei die Sendungen, die empfangen werden sollen, das Kennsignal, das Adressensignal und das Nachrichtensignal in dieser Reihenfolge enthalten und die Adressenerfassungseinrichtung (12, 14) so betreibbar ist, daß sie die weitere Verarbeitung der Kenn- und der Nachrichtensignale erlauben, wenn das vorher festgelegte Adressensignal erfaßt wird, wobei die Sendungen, die empfangen werden sollen, das Kennsignal, das Adressensignal und das Nachrichtensignal in dieser Reihenfolge enthalten und die Adressenerfassungseinrichtung (12, 14) so betreibbar ist, daß sie ein weiters Verarbeiten der Kenn- und Nachrichtensignale ermöglicht, wenn das zuvor festgelegte Adressensignal erfaßt wird.

5. Radiorufanlage nach Anspruch 4, wobei Pufferspeicher (16, 18) für die zeitweise Speicherung der gerade empfangenen Nachrichten und Kennsignale vorgesehen sind, wobei das Kennsignal beim Erfassen des festgelegten Adressensignals durch die Adressenerfassungseinrichtung (12, 14) zu der Vergleichseinrichtung (20) geschickt wird und die Nachrichten und Kennsignale, welche in den Pufferspeichern (16, 18) gespeichert sind, beim Empfang neuer Nachrichten und Kennsignale auf den neuesten Stand gebracht werden.

6. Radiorufanlage nach einem der vorstehenden Ansprüche, wobei das Kennsignal, so angeordnet ist, daß es eine Kontrollfunktion zusätzlich zu den Fehlerkorrekturen oder den Nachrichtenspeicherfunktionen bereitstellt.

**Revendications pour les Etats Contractants: CH, DE, FR, GB, IT, NL, SE**

1. Un récepteur radio de recherche de personne pour recevoir une transmission qui comprend une pluralité de signaux d'adresse sélectifs et une pluralité de signaux de messages respectifs, le récepteur radio de recherche de personne comprenant:

un moyen de détection d'adresse (12, 14) fonctionnel pour détecter un dit signal d'adresse prédéterminé;

une mémoire (24) fonctionnelle pour mémoriser au moins un signal de message associé à un signal d'adresse prédéterminé détecté respectif, et

un moyen de comparaison (20) pour comparer des données mémorisées dans la mémoire à une donnée en cours de réception;

caractérisé en ce que, pour recevoir une transmission comprenant lesdits signaux d'adresse sélectifs, une pluralité de signaux de messages respectifs comprenant une information de contrôle d'erreur capable de fournir une indication de la position d'erreur à l'intérieur des signaux de messages, et des signaux de libellés chacun fournissant une indication d'un code message associé au signal de message respectif;

la mémoire (22, 24) est fonctionnelle pour mémoriser les signaux de libellés de même que le signal de message respectif;

le moyen de comparaison (20) est fonctionnel pour comparer le ou chaque signal de libellé mémorisé dans la mémoire (22, 24) au signal de libellé en cours de réception et pour fournir une indication lorsque les codes de messages des signaux de libellés comparés sont les mêmes, et

un moyen de correction d'erreur (26, 28) est prévu étant sensible à une indication provenent du moyen de comparaison (20) que les codes de message sont les mêmes pour fornir un signal de message corrigé dérivé des signaux de messages mémorisés et en cours de réception ayant le même code de message, en utilisant des parties de chacun des signaux de messages pour lesquelles l'information de contrôle d'erreur indique qu'il n'y a pas d'erreur;

dans lequel les transmissions devant être reçues comprennent le signal de libellé, le signal d'adresse et le signal de message dans cet ordre, le moyen de détection d'addresse (12, 14) étant fonctionnel pour permettre un traitement supplémentaire des signaux de libellés et de messages lorsque le signal d'adresse prédéterminé est détecté.

2. Un récepteur radio de recherche de personne pour recevoir une transmission qui comprend une pluralité de signaux d'adresse sélectifs et une pluralité de signaux de messages respectifs, le récepteur radio de recherche de personne comprenant:

un moyen de détection d'adresse (12, 14) fonctionnel pour détecter un dit signal d'adresse prédéterminé;

une mémoire (24) pour mémoriser au moins un signal de message associé à un signal d'adresse prédéterminé détecté respectif, et

un moyen de comparaison (20) pour comparer une donnée mémorisée dans la mémoire à une donnée en cours de réception;

caractérisé en ce que, pour recevoir une transmission comprenant lesdits signaux d'adresse sélectifs, une pluralité de signaux de messages respectifs et des signaux de libellés fournissent chacun une indication d'un code message associé au signal de message respectif;

le moyen de comparaison (20) est fonctionnel pour comparer le ou chaque signal de libellé mémorisé dans la mémoire (22, 24) au signal de libellé en cours de réception et pour fournir une indication lorsque les codes de messages des signaux de libellés comparés sont les mêmes, la mémoire (22, 24) étant fonctionnelle pour mémoriser le signal de message seulement si le moyen de comparaison (20) n'indique pas que les codes de message des signaux de libellés comparés sont les mêmes;

dans lequel les transmissions devant être reçues comprennent le signal de libellé, le signale d'adresse et le signal de message dans cet ordre, le moyen de détection d'adresse (12, 14) étant fonctionnel pour permettre un traitement supplémentaire des signaux de libellés et de messages lorsque le signal d'adresse prédéterminé est détecté.

3. Un récepteur radio de recherche der personne selon la revendication 1 ou la revendication 2, dans lequel des mémoires tampons (16, 18) sont prévues pour mémoriser temporairement les signaux de messages et de libellés en cours de réception.

4. Un récepteur radio de recherche de personne selon la revendication 3, le signal de libellé en cours de réception est envoyé au moyen de comparaison (20) lors de la détection par le moyen de détection d'adresse (12, 14) du signal d'adresse prédéterminé, les signaux de messages et de libellés mémorisés dans les mémoires tampons (16, 18) étant mis à jour lors de la réception des nouveaux signaux de messages et de libellés.

5. Un récepteur radio de recherche de personne selon l'une quelconque des revendications précédentes, dans lequel le signal de libellé est disposé pour fournir une fonction de commande en plus des fonctions de correction d'erreur ou de mémorisation de message.

**Revendications pour les Etats Contractants: At, BE, LU**

1. Un récepteur radio de recherche de personne pour recevoir une transmission qui comprend une pluralité de signaux d'adresse sélectifs et une pluralité de signaux de messages respectifs, le récepteur radio de recherche de personne comprenant:

un moyen de détection d'adresse (12, 14) fonctionnel pour détecter un dit signal d'adresse prédéterminé;

une mémoire (24) fonctionnelle pour mémoriser au moins un signal de message associé à un signal d'adresse prédéterminé détecté respectif, et

un moyen de comparaison (20) pour comparer une donnée mémorisée dans les mémoires à une donnée en cours de réception;

caractérisé en ce que, pour recevoir une transmission comprenant lesdits signaux d'adresse sélectifs, une pluralité de signaux de messages respectifs comprenant une information de contrôle d'erreur capable de fournir une indication de la position d'erreur à l'intérieur des signaux de messages, et des signaux de libellés chacun fournissant une indication d'un code message associé au signal de message respectif;

la mémoire (22, 24) est fonctionnelle pour mémoriser le signal de libellé de même que le signal de message respectif;

le moyen de comparaison (20) est fonctionnel pour comparer le ou chaque signal de libellé mémorisé dans la mémoire (22, 24) au signal de libellé en cours de réception et pour fournir une indication lorsque les codes de message des signaux de libellés comparés sont les mêmes, et

un moyen de correction d'erreur (26, 28) est fourni étant sensible à une indication provenant du moyen de comparaison (20) que les codes de message comparés sont les mêmes pour fournir un signal de message corrigé dérivé des signaux de messages mémorisés et en cours de réception ayant les mêmes codes de message, en utilisant des parties de chacun des signaux de messages pour lesquelles l'information de contrôle d'erreur indique qu'il n'y a pas d'erreur.

2. Un récepteur radio de recherche de personne pour recevoir une transmission qui comprend une pluralité de signaux d'adresse sélectifs et une pluralité de signaux de messages respectifs, le récepteur radio comprenant:

un moyen de détection d'adresse (12, 14) fonctionnant pour détecter un dit signal d'adresse prédéterminé;

une mémoire (24) pour mémoriser au moins un signal de message associé au signal d'adresse prédéterminé détecté respectif, et

un moyen de comparaison (20) pour comparrer le donnée mémorisée dans la mémoire à une donnée en cours de réception;

caractérisé en ce que, pour recevoir une transmission comprenant lesdits signaux d'adresse sélectifs, une pluralité de signaux de messages respectifs et des signaux de libellés fournissent chacun une indication d'un code message associé au signal de message respectif;

le moyen de comparaison (20) est fonctionnel pour comparer le ou chaque signal de libellé mémorisé dans la mémoire (22, 24) avec signal de libellé en cours de réception et pour fournir une indication lorsque les codes de message des signaux de libellés comparés sont les mêmes, la mémoire (22, 24) étant fonctionelle pour mémoriser le signal de message seulement si les moyens de comparaison (20) n'indiquent pas que les codes de message des signaux de libellés comparés sont les mêmes;

3. Un récepteur radio de recherche de personne selon la revendication 1 ou la revendication 2, dans lequel des mémoires tampons (16, 18) sont prévues pour mémoriser temporairement les signaux de messages et de libellés en cours de réception.

4. Un récepteur radio de recherche de personne selon la revendication 1 ou 2, les transmissions devant être reçues comprennent le signal de libellé, le signal d'adresse et le signal de message dans cet ordre, le moyen de détection d'adresse (12, 14) étant fonctionnel pour permettre un traitement supplémentaire des signaux de libellés et de messages lorsque le signal d'adresse prédéterminé est détecté.

5. Un récepteur radio de recherche de personne selon la revendication 4, dans lequel des mémoires tampons (16, 18) sont prévues pour mémoriser temporairement les signaux de messages et de libellés en cours de réception, le signal de libellé étant envoyé au moyen de comparaison (20) lors de la détection par le moyen de détection d'adresse (12, 14) du signal d'adresse prédéterminé, les signaux de messages et de libellés mémorisés dans les mémoires tampons (16, 18) étant mis à jour lors de la réception de nouveaux signaux de messages et de libellés.

6. Un récepteur radio de recherche de personne selon l'une quelconque des revendications précédentes, dans lequel le signal de libellé est disposé pour assurer une fonction de commande en plus des fonctions de mémorisation de correection d'erreur ou de message.

| LABEL | ADDRESS | MESSAGE |

FROM R.F.
RECEIVER
AND
PREAMBLE
DETECTOR

ADDRESS COMPARATOR — 12

STORED ADDRESS OR ADDRESSES — 14

LABEL BUFFER — 16

MESSAGE BUFFER — 18

LABEL COMPARATOR — 20

TIMING CONTROLLER — 10

LABEL MEMORY — 22

MESSAGE MEMORY — 24

A B C D

A B C D

26

MESSAGE COMBINER — 28

DISPLAY — 30

PRINTER — 32

*Fig.1.*

EP 0 210 213 B1

FIG.2.